# EUROPÄISCHE PATENTSCHRIFT

(11) **EP 4 204 269 B1**
(45) Veröffentlichungstag und Bekanntmachung des Hinweises auf die Patenterteilung: **10.07.2024**
(21) Anmeldenummer: 21748845.1
(22) Anmeldetag: 22.07.2021
(51) Int. Cl.: B60W 40/12

(54) **COMPUTERIMPLEMENTIERTES VERFAHREN ZUM TRAINIEREN EINES KÜNSTLICHEN INTELLIGENZMODULS ZUM BESTIMMEN EINES REIFENTYPS EINES KRAFTFAHRZEUGES**
COMPUTER-IMPLEMENTED METHOD FOR TRAINING AN ARTIFICIAL INTELLIGENCE MODULE TO DETERMINE A TYRE TYPE OF A MOTOR VEHICLE
PROCÉDÉ MIS EN OEUVRE PAR ORDINATEUR POUR ENTRAÎNER UN MODULE D'INTELLIGENCE ARTIFICIELLE AFIN DE DÉTERMINER UN TYPE DE PNEUMATIQUE D'UN VÉHICULE AUTOMOBILE

(30) Priorität: 28.08.2020 DE 102020210888
(43) Veröffentlichungstag der Anmeldung: 05.07.2023
(73) Patentinhaber: Robert Bosch GmbH, 70442 Stuttgart (DE)
(72) Erfinder: BORGES, Julio, 71679 Asperg (DE)
(86) Internationale Anmeldenummer: PCT/EP2021/070526
(87) Internationale Veröffentlichungsnummer: WO 2022/042960

(56) Entgegenhaltungen:
- EP-A1- 2 955 078
- DE-A1- 102005 011 577
- US-A1- 2020 125 887

## Beschreibung

Die vorliegende Erfindung betrifft ein computerimplementiertes Verfahren zum Trainieren eines Künstlichen Intelligenzmoduls zum Bestimmen eines Reifentyps eines Kraftfahrzeuges, ein Computerprogramm, ein Sensorsystem für ein Kraftfahrzeug und ein Kraftfahrzeug.

### Stand der Technik

Im Bereich der automobilen Sensorik sind eine Vielzahl von Sensoren und Sensorsystemen bekannt, welche zur Detektion der Straßenbeschaffenheit bzw. des Reibwertes dienen. Ein Faktor hierbei ist der verwendete Reifentyp, bspw. Sommer- oder Winterreifen.

Die US 2012/0207340 A1 offenbart ein Verfahren zur Unterscheidung von Reifentypen anhand von Bilddaten.

Die DE 10 2005 011 577 A1 offenbart eine Vorrichtung zur Zustandserkennung eines Reifens an einem Rad eines Fahrzeugs.

Die US 2020/0125887 A1 offenbart ein Verfahren zur Erkennung von Reifenbildern.

Die EP 2 955 078 A1 offenbart ein System und ein Verfahren zur Bestimmung der Reifenklasse eines Reifens, welcher an einem Fahrzeug montiert ist, basierend auf mindestens einem Sensorsignal, das von einem im Fahrzeug vorhandenen Sensor empfangen wird.

### Offenbarung der Erfindung

Mit Ausführungsformen der Erfindung kann in vorteilhafter Weise ein verbessertes computerimplementiertes Verfahren zum Trainieren eines Künstlichen Intelligenz (KI) Moduls zum Bestimmen eines Reifentyps eines Kraftfahrzeuges bereitgestellt werden.

Die Erfindung ist in den unabhängigen Ansprüchen definiert. Vorteilhafte Weiterbildungen der Erfindung ergeben sich aus den abhängigen Ansprüchen und der nachfolgenden Beschreibung. Fachbegriffe werden auf die übliche Art und Weise verwendet. Wenn eine bestimmte Bedeutung einem bestimmten Begriff verliehen wird, werden im Folgenden Begriffsdefinitionen gegeben, in deren Rahmen die Begriffe verwendet werden.

Ein Aspekt der Erfindung betrifft ein computerimplementiertes Verfahren zum Trainieren eines Kl Moduls zum Bestimmen eines Reifentyps eines Kraftfahrzeuges aufweisend die Schritte:
- Bereitstellen, auf einem Datenträger, ein Messwertdatensatz, wobei der Messwertdatensatz zumindest einen Dateneintrag über Ultraschalldaten, Geschwindigkeitsdaten und Reifendaten aufweist, wobei die Ultraschalldaten zumindest eine Ultraschallwelle beschreiben, welche durch ein Abrollen eines Reifens des Kraftfahrzeuges erzeugt wurde, wobei die Geschwindigkeitsdaten eine Geschwindigkeit des Kraftfahrzeuges beschreiben, wobei die Reifendaten einen Reifentyps des Kraftfahrzeuges beschreiben,
- Generieren eines Trainingsdatensatzes basierend auf dem Messwertdatensatz, wobei die Generierung des Trainingsdatensatzes die Schritte aufweist:
   - Bilden eines Inputdatensatzes basierend auf den Ultraschalldaten und den Geschwindigkeitsdaten des Messwertdatensatzes,
   - Bilden eines Outputdatensatzes basierend auf den Reifendaten des Messwertdatensatzes,
- Trainieren des Kl Moduls basierend auf dem Trainingsdatensatz.

Ein Vorteil dieser Ausführungsform kann sein, dass mithilfe des KI Moduls bestehende Sensoren an einem Kraftfahrzeug genutzt werden können, um den Typ eines Reifens zu detektieren. Beispielsweise kann dazu ein Ultraschallsensor, wie ein Parkultraschallsensor, genutzt werden, welcher mittels eines Kl Moduls verbunden ist. Dabei kann das Kl Modul die Ultraschallsignale des Ultraschallsensors derart auswerten, dass ein Reifentyp, wie beispielsweise Winter- oder Sommerreifen des Kraftfahrzeuges, detektiert werden kann. Dies kann insbesondere vorteilhaft sein bei autonom fahrenden Kraftfahrzeugen, sodass eine verbesserte Steuerung und Regelung des Kraftfahrzeuges erfolgen kann.

Bei dem KI Modul kann es sich um jeden Prozessor oder Rechner oder Computer handeln, welcher dazu eingerichtet ist, eine Künstliche Intelligenz, einen Maschinenlearning- oder Deeplearningansatz auszuführen. Ferner weist das Verfahren den Schritt auf, Bereitstellen, Herunterladen und/oder Abfragen, auf einem Datenträger oder einer Datenbank, einen Messwertdatensatz, wobei der Messwertdatensatz zumindest einen Dateneintrag über Ultraschalldaten, Geschwindigkeitsdaten und Reifendaten aufweist. Somit kann ein Messwertdatensatz abgefragt bzw. bereitgestellt werden, welcher Daten über ein Kraftfahrzeug aufweist, insbesondere die Daten eines Ultraschallsensors des Kraftfahrzeuges, die Geschwindigkeitsdaten des Kraftfahrzeuges und die Reifendaten des Kraftfahrzeuges. Ferner können die Ultraschalldaten zumindest eine Ultraschallwelle beschreiben, darstellen und/oder speichern. Bei der Ultraschallwelle handelt es sich insbesondere um eine Ultraschallwelle, welche mittels eines Ultraschallsensors aufgezeichnet und in ein Signal zur Datenverarbeitung gewandelt wurde. Die Ultraschallwelle kann dabei durch ein Abrollen bzw. Rollen eines Reifens des Kraftfahrzeuges, insbesondere auf einem Untergrund, entstanden sein. Dabei kann die Ultraschallwelle insbesondere in einem Frequenzbereich von 40kHz bis 60kHz, ferner 45 kHz bis 54 kHz mittels eines Ultraschallsensor aufgenommen worden sein. Ferner können die Geschwindigkeitsdaten eine Geschwindigkeit des Kraftfahrzeuges beschreiben bzw. darstellen. Bei den Geschwindigkeitsdaten handelt es sich beispielsweise um eine Geschwindigkeit des Kraftfahrzeuges in Kilometern pro Stunde. Darüber hinaus können die Reifendaten einen Reifentyp, wie beispielsweise Sommer-oder Winterreifen des Kraftfahrzeuges, beschreiben und/oder speichern. Auch andere Reifentypen, wie beispielsweise Reifen mit Spikes oder ähnliche, können als Reifentyp des Kraftfahrzeuges verwendet werden. Somit sind alle Arten von Reifen von Kraftfahrzeugen umfasst. Ferner kann dabei das Verfahren den Schritt des Generierens, Berechnens und/oder Erstellens eines Trainingsdatensatzes basierend auf dem Messwertdatensatz aufweisen. Bei einem Trainingsdatensatz handelt es sich um einen Typ von Datensatz oder eine Vielzahl von Dateneinträgen, welche dazu genutzt werden können, eine künstliche Intelligenz oder ein KI Modul zu trainieren. Die Generierung des Trainingsdatensatzes kann dabei ferner ein Bilden, Berechnen und/oder Ermitteln eines Inputdatensatzes basierend auf den Ultraschalldaten und den Geschwindigkeitsdaten des Messwertdatensatzes umfassen. Ferner kann der Messwertdatensatz auch weitere Dateneinträge aufweisen, wie bspw. Beschleunigungsdaten und/oder Bremsdaten, welche Beschleunigungs- und/oder Bremswerte des Kraftfahrzeuges beschreiben. Der Trainingsdatensatz kann somit auch mit Hilfe der zusätzlichen Beschleunigungsdaten und/oder Bremsdaten gebildet werden. Der Messwertdatensatz kann darüber hinaus Daten und/oder Dateneinträge umfassen, welche die Fahrdynamik des Kraftfahrzeuges beschreiben. Darüber hinaus handelt es sich bei dem Inputdatensatz um Daten, welche auf eine Inputlayer eines KI Moduls geladen werden können.

Die Generierung des Trainingsdatensatzes weist ferner den Schritt des Bildens, Berechnens und/oder Formens eines Outputdatensatzes basierend auf den Reifendaten des Messwertdatensatzes auf. Dabei kann es sich bei dem Outputdatensatz um einen Datensatz handeln, welcher auf die Outputlayer eines KI Moduls oder Maschinenlearningansatzes geladen werden kann. Bei den Reifendaten kann es sich beispielsweise um Sommer- und/oder Winterreifen handeln. Darüber hinaus weist das Verfahren den Schritt Trainieren des KI Moduls basierend auf dem Trainingsdatensatz auf. Trainieren bedeutet dabei, dass mithilfe des Trainingsdatensatzes die KI des KI Moduls derart geformt, gebildet und/oder berechnet wird, sodass die Ultraschalldaten und die Geschwindigkeitsdaten zum Reifentyp korreliert bzw. vernetzt werden können.

Mithilfe des trainierten Kl Moduls kann eine Software zur Bestimmung des Reifentyps erstellt werden, welche auf einer Recheneinheit beispielsweise eines Ultraschallsensors oder Motorsteuergeräts ausgeführt werden kann. Solch eine Software kann die Ergebnisse des trainierten Kl Moduls anwenden, sodass diese nicht weiter dazu lernen kann, jedoch deutlich weniger Ressourcen benötigt. Beispielsweise kann es sich bei dem KI Modul bzw. der Kl des KI Moduls um ein Recurrent Neural Network Architecture handeln, welche zumindest zwei Layer aufweist. Eine der beiden Layer kann eine Inputlayer sein, welche eine Vielzahl insbesondere von 1 bis 100 Gated Recurrent Units aufweist. Darüber hinaus kann die KI eine Outputlayer aufweisen, welche zumindest ein Neuron aufweist, beispielsweise einen Boolean Output für einen Reifentyp. Darüber hinaus kann optional eine oder eine Vielzahl von versteckten Layern mit Gated Recurrent Units vorgesehen werden. In einem Beispiel weisen die Geschwindigkeitsdaten Geschwindigkeiten ab ca. 40 km/h auf, sodass ein ausreichendes Ultraschallsignal bzw. ein Signal, welches mittels eines Ultraschallsensors detektiert werden kann, in den Ultraschalldaten vorhanden ist. Ferner kann das KI Modul eine Detektionsgenauigkeit von zumindest 95% aufweisen, wenn es mit Messwerten trainiert wurde die vier Autos für zwei Monate jeweils mit einem Monat Sommerreifen und einem Monat Winterreifen beschreiben. Darüber hinaus kann das KI Modul konstant weitertrainiert werden basierend auf neu erfassten Daten, sodass eine noch bessere Detektion des Reifentyps erfolgen kann. Darüber hinaus kann ein Vorteil dieser Ausführungsform sein, dass mithilfe von einer Vielzahl von Parksensoren oder Ultraschallsensoren in einem Kraftfahrzeug eine sehr hohe Zuverlässigkeit des KI Moduls erreicht werden kann, da beispielsweise auch vorbeifahrende Autos o. Ä. aus den Ultraschalldaten herausgefiltert werden können. Ferner kann der Schritt des Bildens des Trainingsdatensatzes auch Umwelteinflüsse berücksichtigen, wie beispielsweise vorbeifahrende Autos oder Lkws, Bauarbeiten, Wetter oder Reifendrücke.

Gemäß einer Ausführungsform weist die Generierung des Trainingsdatensatzes ferner auf:
- Aussortieren von Dateneinträgen im Messwertdatensatz, welche einen vorbestimmten Grenzwert überschreiten und/oder unterschreiten.

Ein Vorteil dieser Ausführungsform kann sein, dass fehlerhafte Messwerte im Messwertdatensatz bereits zu einem frühen Verfahrensstadium aussortiert werden können, sodass die Ergebnisse des KI Moduls weiter verbessert werden können. Ein weiterer Vorteil dieser Ausführungsform kann sein, dass offensichtliche Fehlmessungen, welche, wie beispielsweise das Starten eines Motors o. Ä., aus dem Messwertdatensatz aussortiert werden können, sodass die Zuverlässigkeit des Kl Moduls bzw. des Trainingsdatensatzes weiter verbessert werden kann.

Ferner kann dabei ein Aussortieren, Vergleichen gegen einen Grenzwert und/oder Vorfiltern von einem oder einer Vielzahl von Dateneinträgen im Messwertdatensatz, welche einen vorbestimmten Grenzwert überschreiten, unterschreiten und/oder erreichen. Dabei kann es sich bei dem Grenzwert um bekannte Grenzen für Ultraschall- oder Geschwindigkeitssignale handeln, welche offensichtlich mit einer Fehlmessung bzw. einem Sonderzustand, wie beispielsweise dem Starten eines Motors oder einer Vollbremsung, assoziiert sind. Ferner können dabei auch weitere Dateneinträge ausselektiert oder aussortiert werden, welche nicht in ein vorbestimmtes Trainingsschema passen.

Gemäß einer Ausführungsform weist die Generierung des Trainingsdatensatzes ferner auf:
- Downsampling/Normalisieren der Ultraschalldaten, insbesondere auf eine Frequenz von ca. 1 kHz.

Ein Vorteil dieser Ausführungsform ist, dass die Ultraschalldaten aufgrund des Downsamplings bzw. Normalisierens insbesondere auf einhundert Hertz dazu führen, dass die Datengröße des Datensatzes deutlich verringert werden kann.

Unter dem Begriff Downsampling versteht man die Reduktion der Stützstellen in einer Zeitreihe, insbesondere von Ultraschalldaten über die Zeit. Ferner kann dabei das Downsampling bzw. Normalisieren der Ultraschalldaten auf eine zielgerichtete Frequenz, wie beispielsweise einhundert Hertz, erfolgen. Dabei kann die Frequenz aber auch jede andere sinnvolle Frequenz zwischen 1 und 1000 Hz sein.

Gemäß einer Ausführungsform weist die Generierung des Trainingsdatensatzes ferner auf:
- Standardisieren der Ultraschalldaten und/oder der Geschwindigkeitsdaten des Messwertdatensatzes, insbesondere mittels eines Entfernens des Mittelwerts und/oder einer Skalierung auf Einheitsvarianz.

Ein Vorteil dieser Ausführungsform kann sein, dass mithilfe der Standardisierung der Ultraschalldaten und/oder Geschwindigkeitsdaten eine Stabilität bzw. Effizienz des Lernprozesses und/oder Trainingsprozesses des Kl Moduls verbessert werden.

Ferner kann dabei das Standardisieren, Normalisieren und/oder Angleichen der Ultraschalldaten und/oder der Geschwindigkeitsdaten des Messwertdatensatzes vor der oder während der Erstellung des Trainingsdatensatzes erfolgen. Dabei kann das Standardisieren insbesondere mittels eines Entfernens des Mittelwerts und/oder einer Skalierung auf Einheitsvarianz der Ultraschalldaten und/oder Geschwindigkeitsdaten erfolgen.

Gemäß einer Ausführungsform weist die Generierung des Trainingsdatensatzes ferner auf:
- Bilden von Bruchteilen zeitlich aufgelöster Ultraschalldaten und/oder Geschwindigkeitsdaten zur Modellierung von Zeitreihen, insbesondere eines Time Windows.

Ein Vorteil dieser Ausführungsform kann sein, dass mithilfe des Bildens von Bruchteilen das Trainieren bzw. Lernen des KI Moduls, insbesondere eines Recurrent Neural Networks, verbessert werden kann. In anderen Worten können Bruchteile und/oder Batches von zeitlich aufgelösten Daten, insbesondere Ultraschalldaten und/oder Geschwindigkeitsdaten, zur Modellierung von Zeitreihen gebildet, berechnet und/oder erstellt werden. Dabei kann insbesondere ein alternierendes Zeitfenster bzw. Sliding Time Window zur Modellierung der Zeitreihen erstellt werden, insbesondere basierend auf den gebildeten Bruchteilen von zeitlich aufgelösten Ultraschalldaten und/oder Geschwindigkeitsdaten.

Gemäß einer Ausführungsform beträgt eine Dauer des Bruchteils 1 bis 60 Sekunden.

Ein Vorteil dieser Ausführungsform kann sein, dass der Bruchteil an eine verfügbare Speicherkapazität angepasst werden kann, sodass die Anwendungsmöglichkeiten des Verfahrens vergrößert werden können.

Eine Dauer eines Bruchteiles beschreibt insbesondere ein Batch innerhalb eines Sliding Time Windows. Die Dauer kann dabei zwischen 1 und 60 Sekunden betragen. Ferner kann dabei aber auch jede andere Dauer verwendet werden, welche dazu eingerichtet oder nutzbar ist, ein Sliding Time Window auf einem programmierbaren Controller einzurichten.

Gemäß einer Ausführungsform weist die Generierung des Trainingsdatensatzes ferner auf:
- Vergleichen der Geschwindigkeitsdaten zu einem vorbestimmten Geschwindigkeitsgrenzwert,
- Aussortieren von Dateneinträgen der Ultraschalldaten im Messwertdatensatz, wenn die Geschwindigkeitsdaten, zum selben Zeitpunkt wie die Ultraschalldaten, den vorbestimmten Geschwindigkeitsgrenzwert erreichen, überschreiten oder unterschreiten.

Ein Vorteil dieser Ausführungsform kann sein, dass mithilfe der Geschwindigkeitsdaten Ultraschalldaten aussortiert werden können, welche für das Trainieren des Kl Moduls nicht relevant sind. Beispielsweise kann ein Grenzwert auf 40 Stundenkilometer gesetzt werden und alle Ultraschalldaten, welche einen korrespondierenden Geschwindigkeitswert von unter 40 km/h aufweisen, können aussortiert werden. Dies kann insbesondere den Vorteil haben, dass die benötigte Speicherkapazität zum Trainieren des Kl Moduls deutlich reduziert werden kann. Dabei können die Geschwindigkeitsdaten zu einem vorbestimmten Geschwindigkeitsgrenzwert verglichen, berechnet und/oder ermittelt werden. Ferner können dann alle Dateneinträge der Ultraschalldaten im Messwertdatensatz aussortiert, selektiert und/oder gefiltert werden, wenn die Geschwindigkeitsdaten zum selben Zeitpunkt bzw. zeitgleich wie die Ultraschalldaten bzw. zum Aufnahmezeitpunkt der Ultraschalldaten den vorbestimmten Grenzwert erreichen, überschreiten und/oder unterschreiten.

Ein weiterer Aspekt der Erfindung betrifft ein Computerprogramm, welches, wenn es ausgeführt wird, einen Prozessor instruiert, Schritte des Verfahrens, wie voranstehend und nachfolgend beschrieben, auszuführen.

Ein weiterer Aspekt betrifft ein Sensorsystem für ein Kraftfahrzeug, aufweisend:
- zumindest einen Ultraschallsensor, insbesondere einen Parkultraschallsensor,
- ein KI Modul, welches mit dem Verfahren, wie voranstehend und nachfolgend beschrieben, trainiert wurde,

wobei der Ultraschallsensor dazu eingerichtet ist, eine Ultraschallwelle zu detektieren, welche durch ein Abrollen eines Reifens eines Kraftfahrzeuges auf einem Untergrund entstanden ist,
wobei der Ultraschallsensor mit dem KI Modul verbunden ist, insbesondere mittels einer Internetverbindung,
wobei das KI Modul dazu eingerichtet ist, anhand der durch den Ultraschallsensor erfassten Ultraschallwelle einen Reifentyp des Reifens des Kraftfahrzeuges zu bestimmen.

Ein Vorteil dieser Ausführungsform kann sein, dass das Sensorsystem auf bereits bestehende Ultraschallsensoren, wie beispielsweise Parkultraschallsensoren, in einem Kraftfahrzeug zugreifen kann, sodass eine Funktionalitätssteigerung der Ultraschallsensoren stattfindet. Ferner können dadurch Kosten gespart werden, da keine weiteren Sensoren zur Detektion der Sommer- bzw. Winterreifen benötigt werden.

Dabei kann es sich bei dem Sensorsystem um ein zentrales Onboardsensorsystem handeln oder um ein dezentrales Sensorsystem. Ein zentrales Onboardsensorsystem kann autark in einen Kraftfahrzeug operieren. Das dezentrale Sensorsystem kann einen Ultraschallsensor aufweisen, der in einem Kraftfahrzeug angeordnet ist und das Kl Modul wird auf einem Computer oder Server betrieben, welches außerhalb des Kraftfahrzeuges angeordnet ist. Dabei kann das Kl Modul insbesondere mittels einer Internetverbindung o. Ä. mit dem Ultraschallsensor verbunden sein.

Ein weiterer Aspekt der Erfindung ist ein Kraftfahrzeug aufweisend:
- zumindest einen Reifen,
- ein Sensorsystem, wie voranstehend und nachfolgend beschrieben, und/oder
- ein computerlesbares Medium, welches ein Computerprogramm, wie voranstehend und nachfolgend beschrieben, speichert,
wobei das Sensorsystem dazu eingerichtet ist, einen Typ des zumindest einen Reifens zu bestimmen.

Ein Vorteil dieser Ausführungsform kann sein, dass mithilfe eines solchen Kraftfahrzeuges ein autonomer Fahrvorgang verbessert werden kann, da mithilfe der Detektion bzw. Bestimmung des Typs des Reifens des Kraftfahrzeuges eine verbesserte Reibwertanalyse vollzogen werden kann.

Elemente und Schritte des Verfahrens, so wie voranstehend und nachfolgend beschrieben, können Merkmale und Elemente des Sensorsystems, so wie voranstehend und nachfolgend beschrieben, und/oder des Kraftfahrzeuges, so wie voranstehend und nachfolgend beschrieben, sein und umgekehrt.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Fig. 1 zeigt ein Flussdiagramm zur Illustration von Schritten des computerimplementierten Verfahrens gemäß einer Ausführungsform.
Fig. 2 zeigt ein Flussdiagramm zur Illustration von Schritten des computerimplementierten Verfahrens gemäß einer Ausführungsform.
Fig. 3 zeigt ein Sensorsystem gemäß einer Ausführungsform.
Fig. 4 zeigt ein Kraftfahrzeug gemäß einer Ausführungsform.

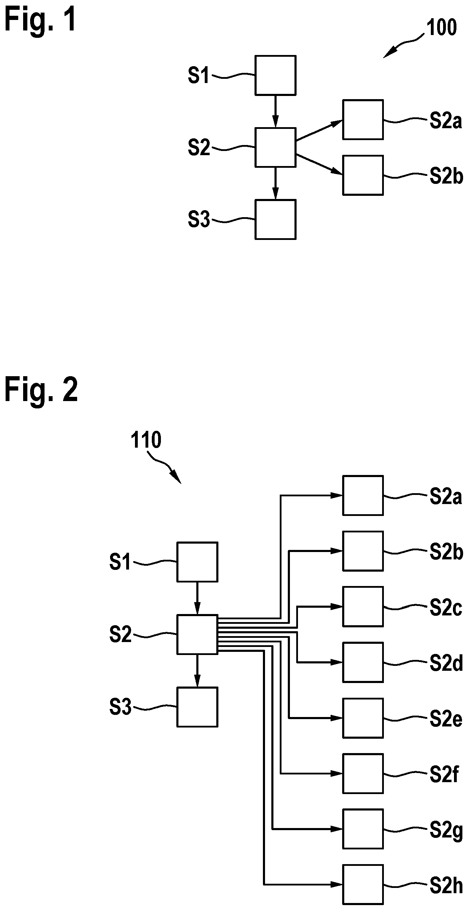

Fig. 1 zeigt ein Flussdiagramm zur Illustration von Schritten des computerimplementierten Verfahrens 100 zum Trainieren eines Kl Moduls 204 zum Bestimmen eines Reifentyps eines Kraftfahrzeuges 300 aufweisend die Schritte:
- Bereitstellen S1 auf einem Datenträger ein Messwertdatensatz, wobei der Messwertdatensatz zumindest einen Dateneintrag über Ultraschalldaten, Geschwindigkeitsdaten und Reifendaten aufweist, wobei die Ultraschalldaten zumindest eine Ultraschallwelle beschreiben, welche durch ein Abrollen eines Reifens 202 des Kraftfahrzeuges 300 erzeugt wurde, wobei die Geschwindigkeitsdaten eine Geschwindigkeit des Kraftfahrzeuges 300 beschreiben, wobei die Reifendaten einen Reifentyp des Kraftfahrzeuges 300 beschreiben,
- Generieren S2 eines Trainingsdatensatzes basierend auf dem Messwertdatensatz, wobei die Generierung des Trainingsdatensatzes die Schritte aufweist:
   - Bilden eines Inputdatensatzes S2a basierend auf den Ultraschalldaten und den Geschwindigkeitsdaten des Messwertdatensatzes,
   - Bilden eines Outputdatensatzes S2b basierend auf den Reifendaten des Messwertdatensatzes,
- Trainieren S3 des KI Moduls 204 basierend auf dem Trainingsdatensatz.

Der Vorteil dieser Ausführungsform kann sein, dass mithilfe des Verfahrens 100 bereits vorhandene Ultraschallsensoren 202 genutzt werden können in einem Kraftfahrzeug 300, um einen Typ eines Reifens 302 des Kraftfahrzeuges 300 zu bestimmen.

Ferner kann dabei das Verfahren in der Reihenfolge, wie durch die Bezugszeichen vorgegeben, durchgeführt werden bzw. auch in jeder anderen Reihenfolge. Dabei ist jedoch besonders darauf hinzuweisen, dass die Schritte S2a bis S2h in jeder beliebigen Reihenfolge, insbesondere in jeder technisch sinnvollen Reihenfolge, durchgeführt werden können. In anderen Worten kann mithilfe von einem Datensatz, beispielsweise bestehend aus Ultraschallsignalen, Geschwindigkeit, Reifentyp und zusätzlichen optionalen Informationen, wie beispielsweise Typ des Kraftfahrzeuges 300 sowie verschiedene Umweltfaktoren, wie vorbeifahrende Fahrzeuge, Hindernisse, wie Baustellen, oder Wetterdaten sowie Luftdruckdaten, genutzt werden, ein KI Modul 204 zu trainieren. Der Datensatz bzw. die Messdaten können mit den Verfahrensschritten 2a bis 2h aufbereitet werden, bevor das Modell trainiert wird.

Fig. 2 zeigt ein Flussdiagramm zur Illustration von Schritten des weiteren Verfahrens 110. Das weitere Verfahren 110 kann dabei die Schritte S1 bis S3 aufweisen, wie bereits im Hinblick auf Fig. 1 erläutert wurde. Darüber hinaus lässt sich bei dem erweiterten Verfahren 110 in Schritt S2 eine Vielzahl von Vorbereitungsschritten zur Generierung des Trainingsdatensatzes zusammenfassen. Der Schritt S2 kann dabei die Schritte S2a, Bilden eines Inputdatensatzes basierend auf den Ultraschalldaten und den Geschwindigkeitsdaten des Messwertdatensatzes sowie den Schritt S2b Bilden eines Outputdatensatzes basierend auf den Reifendaten des Messwertdatensatzes umfassen. Darüber hinaus kann der Schritt S2 des erweiterten Verfahrens 110 den Schritt Aussortieren S2c von Dateneinträgen im Messwertdatensatz, welche einen vorbestimmten Grenzwert überschreiten oder unterschreiten, aufweisen. Darüber hinaus verfügt das Verfahren 110 über den Schritt Downsampling/Normalisieren S2d der Ultraschalldaten, insbesondere auf eine Frequenz von ca. 100 Hertz. Ferner kann der Schritt S2 des weiteren Verfahrens 110 den Schritt aufweisen, Standardisieren S2e der Ultraschalldaten und/oder der Geschwindigkeitsdaten des Messwertdatensatzes, insbesondere mittels eines Entfernens des Mittelwerts und/oder einer Skalierung auf Einheitsvarianz. Darüber hinaus kann das erweiterte Verfahren 110 den Schritt aufweisen Bilden von Bruchteilen S2f zeitlich aufgelöster Ultraschalldaten und/oder Geschwindigkeitsdaten zur Modellierung von Zeitreihen, insbesondere eines alternierenden Zeitfensters. Ferner kann das erweiterte Verfahren 110 den Schritt Vergleichen S2g der Geschwindigkeitsdaten zu einem vorbestimmten Geschwindigkeitswert aufweisen. Darüber hinaus kann das erweiterte Verfahren 110 Aussortieren S2h von Dateneinträgen der Ultraschalldaten im Messwertdatensatz, wenn die Geschwindigkeitsdaten zum selben Zeitpunkt wie die Ultraschalldaten den vorbestimmten Grenzwert erreichen, überschreiten und/oder unterschreiten, umfassen.

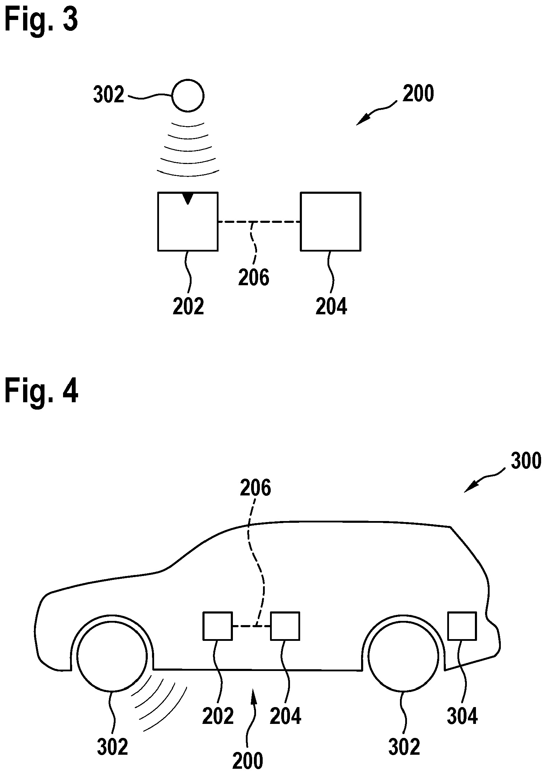

Fig. 3 zeigt ein Sensorsystem 200, welches einen Ultraschallsensor 202 sowie ein KI Modul 204 aufweist. Das KI Modul 204 kann mithilfe einer Verbindung, insbesondere einer Internetverbindung 206, mit dem Ultraschallsensor 202 verbunden sein. Ferner kann das KI Modul 204 mit jeder anderen Form von Verbindung, insbesondere drahtgebunden bzw. kabellos, mit dem Ultraschallsensor 202 verbunden sein. Der Ultraschallsensor 202 kann dabei eine Ultraschall- oder andere Schallwellen erfassen, welche durch das Abrollen eines Reifens 302 entstehen.

Fig. 4 zeigt ein Kraftfahrzeug 300. Das Kraftfahrzeug 300 weist ein Sensorsystem 200 auf. Das Sensorsystem 200 weist einen Ultraschallsensor 202, welcher insbesondere ein Parkultraschallsensor des Kraftfahrzeuges 300 sein kann, und ein KI Modul 204 auf. Das KI Modul 204 kann sich auch außerhalb des Kraftfahrzeuges 300 befinden, wie beispielsweise auf einem Server. Das KI Modul 204 und der Ultraschallsensor 202 können mittels einer Verbindung 206 miteinander verbunden werden, insbesondere mittels einer Internet- oder drahtlosen Verbindungstechnik. Ferner kann der Ultraschallsensor 202 des Kraftfahrzeuges 300 eine Ultraschallwelle oder eine Schallwelle detektieren, welche durch ein Abrollen des Reifens 302 des Kraftfahrzeuges 300 entsteht. Ferner kann das Kraftfahrzeug 300 ein computerlesbares Medium 304 aufweisen, auf welchem das KI Modul 204 oder Trainingsdatensätze oder ein Computerprogramm gespeichert sein können. Ferner kann das Kraftfahrzeug 300 eine Software aufweisen, welche basierend auf den Ergebnissen des KI Moduls 204 operiert. Diese Software kann anhand der Ultraschalldaten und der Geschwindigkeitsdaten den Reifentyp detektieren, jedoch kann die Software nicht weiter das KI Modul 204 verbessern. Ferner kann eine solche Software auf eine Vielzahl von Motorsteuergeräten installiert werden um dort insbesondere Modellunabhängig, den Reifentyp von Kraftfahrzeugen 300 zu detektieren.

Ergänzend sei darauf hingewiesen, dass "umfassend" und "aufweisend" keine anderen Elemente ausschließen und die unbestimmten Artikel "eine" oder "ein" keine Vielzahl ausschließen. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkungen anzusehen.

## Patentansprüche

1. Computerimplementiertes Verfahren (100) zum Trainieren eines künstlichen Intelligenz (KI) Moduls (204) zum Bestimmen eines Reifentyps eines Kraftfahrzeuges (300) aufweisend die Schritte:
- Bereitstellen (S1), auf einem Datenträger, einen Messwertdatensatz, wobei der Messwertdatensatz zumindest einen Dateneintrag über Ultraschalldaten, Geschwindigkeitsdaten und Reifendaten aufweist, wobei die Ultraschalldaten zumindest eine Ultraschallwelle beschreiben, welche durch ein Abrollen eines Reifens (302) des Kraftfahrzeuges (300) erzeugt wurde, wobei die Geschwindigkeitsdaten eine Geschwindigkeit des Kraftfahrzeuges (300) beschreiben, wobei die Reifendaten einen Reifentyp des Kraftfahrzeuges (300) beschreiben,
- Generieren (S2) eines modifizierten Trainingsdatensatzes basierend auf dem Messwertdatensatz, wobei die Generierung des modifizierten Trainingsdatensatzes die Schritte aufweist:
- Bilden eines Inputdatensatzes (S2a) basierend auf den Ultraschalldaten und den Geschwindigkeitsdaten des Messwertdatensatzes,
- Bilden eines Outputdatensatzes (S2b) basierend auf den Reifendaten des Messwertdatensatzes,
- Trainieren (S3) des KI Moduls (204) basierend auf dem modifizierten Trainingsdatensatzes.

2. Verfahren gemäß Anspruch 1, wobei die Generierung des modifizierten Trainingsdatensatzes ferner aufweist:
- Aussortieren (S2c) von Dateneinträgen im Messwertdatensatz, welche einen vorbestimmten Grenzwert überschreiten und/oder unterschreiten.

3. Verfahren gemäß einem der vorherigen Ansprüche, wobei die Generierung des modifizierten Trainingsdatensatzes ferner aufweist:
- Downsampling/Normalisieren (S2d) der Ultraschalldaten, insbesondere auf eine Frequenz von ca. 100 Hz.

4. Verfahren gemäß einem der vorherigen Ansprüche, wobei die Generierung des modifizierten Trainingsdatensatzes ferner aufweist:
- Standardisieren der Ultraschalldaten (S2e) und/oder der Geschwindigkeitsdaten des Messwertdatensatz, insbesondere mittels eines Entfernens des Mittelwerts und/oder einer Skalierung auf Einheitsvarianz.

5. Verfahren gemäß einem der vorherigen Ansprüche, wobei die Generierung des modifizierten Trainingsdatensatzes ferner aufweist:
- Bilden von Bruchteilen (S2f) zeitlich aufgelöster Ultraschalldaten und/oder Geschwindigkeitsdaten zur Modellierung von Zeitreihen, insbesondere eines Time Windows.

6. Verfahren gemäß Anspruch 5, wobei eine Dauer des Bruchteils 1 bis 60 Sekunden beträgt.

7. Verfahren gemäß einem der vorherigen Ansprüche, wobei die Generierung des modifizierten Trainingsdatensatzes ferner aufweist:
- Vergleichen (S2g) der Geschwindigkeitsdaten zu einem vorbestimmten Geschwindigkeitsgrenzwert,
- Aussortieren (S2h) von Dateneinträgen der Ultraschalldaten im initialen Trainingsdatensatz wenn die Geschwindigkeitsdaten, zum selben Zeitpunkt wie die Ultraschalldaten, den vorbestimmten Geschwindigkeitsgrenzwert erreichen, überschreiten und/oder unterschreiten.

8. Computerprogram, welches wenn es ausgeführt wird, einen Prozessor instruiert, Schritte des Verfahren gemäß einem der Ansprüche 1 bis 7 auszuführen.

9. Sensorsystem (200) für ein Kraftfahrzeug (300), aufweisend:
- zumindest einen Ultraschallsensor (202), insbesondere einen Parkultraschallsensor,
- ein Kl Modul (204), welches mit dem Verfahren gemäß einem der Ansprüche 1 bis 7 trainiert wurde,
wobei der Ultraschallsensor (202) dazu eingerichtet ist, eine Ultraschallwelle zu detektieren, welche durch ein Abrollen eines Reifens (302) eines Kraftfahrzeuges (300) auf einem Untergrund entstanden ist,
wobei der Ultraschallsensor (202) mit dem KI Modul (204) verbunden ist, insbesondere mittels einer Internetverbindung,
wobei das KI Modul (204) dazu eingerichtet ist, anhand der durch den Ultraschallsensor (202) erfassten Ultraschallwelle einen Reifentyp des Reifens (302)des Kraftfahrzeuges (300) zu bestimmen.

10. Kraftfahrzeug (300) aufweisend:
- zumindest einen Reifen (302),
- einen Sensorsystem (200) gemäß Anspruch 9, und/oder
- ein computerlesbares Medium (304) welches ein Computerprogramm gemäß Anspruch 8 speichert,
wobei das Sensorsystem (200) dazu eingerichtet ist einen Typ des zumindest einen Reifens (302) zu bestimmen.

## Claims

1. Computer-implemented method (100) for training an artificial intelligence (AI) module (204) to determine a tyre type of a motor vehicle (300), having the steps of:
- providing (S1) a measured value data set on a data storage medium, wherein the measured value data set has at least one data entry relating to ultrasonic data, speed data and tyre data, wherein the ultrasonic data describe at least one ultrasonic wave which was produced by rolling of a tyre (302) of the motor vehicle (300), wherein the speed data describe a speed of the motor vehicle (300), wherein the tyre data describe a tyre type of the motor vehicle (300),
- generating (S2) a modified training data set on the basis of the measured value data set, wherein the generation of the modified training data set has the steps of:
- forming an input data set (S2a) on the basis of the ultrasonic data and the speed data from the measured value data set,
- forming an output data set (S2b) on the basis of the tyre data from the measured value data set,
- training (S3) the AI module (204) on the basis of the modified training data set.

2. Method according to Claim 1, wherein the generation of the modified training data set also comprises:
- sorting out (S2c) data entries in the measured value data set which exceed and/or undershoot a predetermined limit value.

3. Method according to one of the preceding claims, wherein the generation of the modified training data set also comprises:
- downsampling/normalizing (S2d) the ultrasonic data, in particular to a frequency of approximately 100 Hz.

4. Method according to one of the preceding claims, wherein the generation of the modified training data set also comprises:
- standardizing the ultrasonic data (S2e) and/or the speed data from the measured value data set, in particular by removing the average value and/or scaling to unit variance.

5. Method according to one of the preceding claims, wherein the generation of the modified training data set also comprises:
- forming fractions (S2f) of temporally resolved ultrasonic data and/or speed data in order to model time series, in particular a time window.

6. Method according to Claim 5, wherein a duration of the fraction is 1 to 60 seconds.

7. Method according to one of the preceding claims, wherein the generation of the modified training data set also comprises:
- comparing (S2g) the speed data to form a predetermined speed limit value,
- sorting out (S2h) data entries of the ultrasonic data in the initial training data set if the speed data reach, exceed and/or undershoot the predetermined speed limit value at the same time as the ultrasonic data.

8. Computer program which, when executed, instructs a processor to carry out steps of the method according to one of Claims 1 to 7.

9. Sensor system (200) for a motor vehicle (300), having:
- at least one ultrasonic sensor (202), in particular a parking ultrasonic sensor,
- an AI module (204) which was trained using the method according to one of Claims 1 to 7,
wherein the ultrasonic sensor (202) is configured to detect an ultrasonic wave which was produced by rolling of a tyre (302) of a motor vehicle (300) on a substrate, wherein the ultrasonic sensor (202) is connected to the AI module (204), in particular by means of an Internet connection,
wherein the AI module (204) is configured to determine a tyre type of the tyre (302) of the motor vehicle (300) on the basis of the ultrasonic wave captured by the ultrasonic sensor (202).

10. Motor vehicle (300) having:
- at least one tyre (302),
- a sensor system (200) according to Claim 9, and/or
- a computer-readable medium (304) which stores a computer program according to Claim 8,
wherein the sensor system (200) is configured to determine a type of the at least one tyre (302).

## Revendications

1. Procédé mis en œuvre par ordinateur (100) pour entraîner un module (204) d'intelligence artificielle (IA) afin de déterminer un type de pneu d'un véhicule automobile (300), présentant les étapes consistant à :
- fournir (S1) un ensemble de données de valeurs de mesure sur un support de données, dans lequel l'ensemble de données de valeurs de mesure présente au moins un enregistrement de données concernant des données ultrasonores, des données de vitesse et des données de pneu, dans lequel les données ultrasonores décrivent au moins une onde ultrasonore qui a été produite par le roulement d'un pneu (302) du véhicule automobile (300), dans lequel les données de vitesse décrivent une vitesse du véhicule automobile (300), dans lequel les données de pneu décrivent un type de pneu du véhicule automobile (300),
- générer (S2) un ensemble de données d'entraînement modifié sur la base de l'ensemble de données de valeurs de mesure, la génération de l'ensemble de données d'entraînement modifié présentant les étapes consistant à :
- former un ensemble de données d'entrée (S2a) sur la base des données ultrasonores et des données de vitesse de l'ensemble de données de valeurs de mesure,
- former un ensemble de données de sortie (S2b) sur la base des données de pneu de l'ensemble de données de valeurs de mesure,
- entraîner (S3) le module IA (204) sur la base de l'ensemble de données d'entraînement modifié.

2. Procédé selon la revendication 1, dans lequel la génération de l'ensemble de données d'entraînement modifié présente en outre l'étape consistant à :
- éliminer (S2c) des enregistrements de données dans l'ensemble de données de valeurs de mesure qui dépassent et/ou soupassent une valeur limite prédéterminée.

3. Procédé selon l'une quelconque des revendications précédentes, dans lequel la génération de l'ensemble de données d'entraînement modifié présente en outre l'étape consistant à :
- sous-échantillonner/ normaliser (S2d) les données ultrasonores, en particulier sur une fréquence d'environ 100 Hz.

4. Procédé selon l'une quelconque des revendications précédentes, dans lequel la génération de l'ensemble de données d'entraînement modifié présente en outre l'étape consistant à :
- standardiser les données ultrasonores (S2e) et/ou les données de vitesse de l'ensemble de données de valeurs de mesure, en particulier par une suppression de la moyenne et/ou par une mise à l'échelle à la variance unitaire.

5. Procédé selon l'une quelconque des revendications précédentes, dans lequel la génération de l'ensemble de données d'entraînement modifié présente en outre l'étape consistant à :
- former des fractions (S2f) de données ultrasonores et/ou de données de vitesse résolues en temps pour modéliser des séries chronologiques, en particulier une fenêtre de temps.

6. Procédé selon la revendication 5, dans lequel une durée de la fraction est comprise entre 1 et 60 secondes.

7. Procédé selon l'une quelconque des revendications précédentes, dans lequel la génération de l'ensemble de données d'entraînement modifié présente en outre l'étape consistant à :
- comparer (S2g) les données de vitesse avec une valeur limite de vitesse prédéterminée,
- éliminer (S2h) des enregistrements de données des données ultrasonore dans l'ensemble de données d'entraînement initial lorsque les données de vitesse atteignent, dépassent et/ou soupassent la valeur limite de vitesse prédéterminée au même moment que les données ultrasonores.

8. Programme informatique qui, lorsqu'il est exécuté, ordonne à un processeur d'exécuter les étapes du procédé selon l'une quelconque des revendications 1 à 7.

9. Système de capteurs (200) pour un véhicule automobile (300), présentant :
- au moins un capteur à ultrasons (202), en particulier un capteur à ultrasons de stationnement,
- un module IA (204) qui a été entraîné par le procédé selon l'une quelconque des revendications 1 à 7,
dans lequel le capteur à ultrasons (202) est conçu pour détecter une onde ultrasonore qui est apparue suite au roulement d'un pneu (302) d'un véhicule automobile (300) sur un sol,
dans lequel le capteur à ultrasons (202) est relié au module IA (204), en particulier par une connexion internet,
dans lequel le module IA (204) est conçu pour déterminer, à l'aide de l'onde ultrasonore détectée par le capteur à ultrasons (202), un type de pneu du pneu (302) du véhicule automobile (300).

10. Véhicule automobile (300), présentant :
- au moins un pneu (302),
- un système de capteurs (200) selon la revendication 9, et/ou
- un support lisible par ordinateur (304) qui mémorise un programme informatique selon la revendication 8,
dans lequel le système de capteurs (200) est conçu pour déterminer un type dudit au moins un pneu (302).
